(19) Europäisches Patentamt
European Patent Office
Office européen des brevets

(11) Veröffentlichungsnummer: **0 063 292**
**B1**

(12) **EUROPÄISCHE PATENTSCHRIFT**

(45) Veröffentlichungstag der Patentschrift: **21.08.85**

(51) Int. Cl.⁴: **C 08 G 63/12,** C 09 D 3/64

(21) Anmeldenummer: **82102857.8**

(22) Anmeldetag: **03.04.82**

(54) **Verfahren zur Herstellung von Polyestern bzw. Alkydharzen, nach diesem Verfahren erhältliche Harze und deren Verwendung als Lackbindemittel.**

(30) Priorität: **14.04.81 DE 3115072**

(43) Veröffentlichungstag der Anmeldung: **27.10.82 Patentblatt 82/43**

(45) Bekanntmachung des Hinweises auf die Patenterteilung: **21.08.85 Patentblatt 85/34**

(84) Benannte Vertragsstaaten: **DE FR GB IT NL**

(56) Entgegenhaltungen:
**DE - A - 1 669 141**
**DE - C - 686 092**
**GB - A - 505 016**
**GB - A - 585 496**
**US - A - 2 550 706**

**CHEMICAL ABSTRACTS, Verbindungsnummer (65503-63-0); Band 88, 1978, Chem. Subst. Index, Seite 2927 CS, "D-Mannitol, polymer with 1,3-butanediol and 1,2-cyclohexane-dicarboxylic acid" 74916s- Referat über JP-Kokai 77-76358 vom 27. Juni 1977, Appl. 75/152372, ADEKA ARGUS CHEMICAL CO.**

(73) Patentinhaber: **BAYER AG, Konzernverwaltung RP Patentabteilung, D-5090 Leverkusen 1 Bayerwerk (DE)**

(72) Erfinder: **Reuter, Knud, Dr., Buschstrasse 149, D-4150 Krefeld (DE)**
Erfinder: **Dhein, Rolf, Dr., Deswatinesstrasse 30, D-4150 Krefeld (DE)**
Erfinder: **Fleiter, Lothar, Dr., Bärenstrasse 7, D-4150 Krefeld (DE)**

**EP 0 063 292 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Polyestern bzw. Alkydharzen (= Fettsäure-modifizierten Polyestern) aus 5- bis 6wertigen Alkoholen und Hexahydrophthalsäuren (oder ihren Derivaten), nach diesem Verfahren erhältliche Polyester bzw. Alkydharze und deren Verwendung als Lackbindemittel, insbesondere für lufttrocknende Lacke.

Die Verwendung von Zuckeralkoholen, wie z. B. Sorbit, Mannit und Xylit, zur Herstellung von Polyestern bzw. Alkydharzen ist bekannt; vgl. R. M. Goepp et al., Ind. Eng. Chem. 30 (33), 1222—1227 (1938), E. Schwenk et al., defazet 10 (3), 79—83 (1956), K. Hájek, Farbe und Lack 83 (9), 798—804 (1977), S. Creselius, Off. Digest 25, 175—178 (1953), J. P. Burns, Paint Varn. Prod. 48, 54—56, 157 (1958).

Gegenüber üblichen Polyolkomponenten, wie Glycerin, Trimethylolpropan und Pentaerythrit, erweisen sich die höherwertigen linearen aliphatischen Alkohole als äußerst empfindlich gegen hohe Temperaturen und saure Medien. Die in erheblichem Umfang ablaufenden Nebenreaktionen führen zu unerwünschter Dunkelfärbung der Harze. Nach dem oben erwähnten defazet-Artikel steigt die Jodfarbzahl eines Alkydharzes bei Einsatz von nur 10% Sorbit bereits auf das Fünffache, bezogen auf ein Sorbit-freies Alkydharz.

Die Empfindlichkeit der Zuckeralkohole hat dazu geführt, daß man in der Vergangenheit die Nebenreaktionen durch spezielle — umständliche — Verfahren möglichst weitgehend zu unterdrücken suchte.

Die geschilderten Nachteile haben einer breiten technischen Nutzung 5- und 6wertiger Zuckeralkohole bislang im Wege gestanden, obwohl sie leicht zugänglich und verhältnismäßig preiswürdig sind. Da eine stärkere Nutzung erdölunabhängiger Rohstoffe wünschenswert erscheint, war es Aufgabe der Erfindung, Polyester bzw. Alkydharze aus 5- bis 6wertigen Zuckeralkoholen herzustellen, ohne daß die obengenannten Nachteile eintreten.

Überraschenderweise wurde gefunden, daß 5- und 6wertige Zuckeralkohole relativ problemlos als Polyolkomponenten für die Herstellung von Polyestern bzw. Alkydharzen eingesetzt werden können, wenn man als Säurekomponenten möglichst hohe Anteile von Hexahydrophthalsäuren (oder ihren Derivaten) einsetzt und auf die Verwendung aromatischer Polycarbonsäuren (oder ihrer Derivate) weitgehend, vorzugsweise ganz, verzichtet.

Gegenstand der Erfindung ist ein Verfahren zur Herstellung von gegebenenfalls Fettsäure-modifizierten Polyestern aus 2- bis 6wertigen Alkoholen, Polycarbonsäuren (oder ihren veresterungsfähigen Derivaten), gegebenenfalls Monocarbonsäuren und/oder einwertigen Alkoholen, dadurch gekennzeichnet, daß

a) die 2- bis 6wertigen Alkohole zu mindestens 10, vorzugsweise mindestens 30, insbesondere über 60 Gew.-%, bezogen auf alle eingesetzten Alkohole, aus 5- bis 6wertigen Zuckeralkoholen und
b) die Polycarbonsäuren bzw. ihre Derivate zu 50 bis 100, vorzugsweise 80 bis 100, insbesondere 98 bis 100 Gew-%, bezogen auf alle eingesetzten Polycarbonsäurekomponenten, aus Hexahydrophthalsäure(anhydrid), 3-Methylhexahydrophthalsäure(anhydrid) oder 4-Methylhexahydrophthalsäure(anhydrid) oder ihren veresterungsfähigen Derivaten bestehen mit der Maßgabe, daß die eingesetzten Polycarbonsäurekomponenten nicht mehr als 50, vorzugsweise nicht mehr als 30, insbesondere nicht mehr als 10 Gew.-%, aromatische Polycarbonsäuren oder deren veresterungsfähige Derivate enthalten. »Polycarbonsäruen« sind insbesondere zwei-, drei- und vierbasische Carbonsäuren.

Weiterer Gegenstand der Erfindung sind nach diesem Verfahren erhältliche Polyester bzw. Alkydharze. Weiterer Gegenstand der Erfindung ist die Verwendung dieser Polyester und Alkydharze als Lackbindemittel, insbesondere für lufttrocknende Lacke.

Aus den erfindungsgemäß hergestellten Harzen lasen sich überraschenderweise trotz des weitgehenden oder vollständigen Ausschlusses von Phthalsäure bzw. Isophthalsäure Lacke guter Trocknung und Härte produzieren.

Die erfindungsgemäß zu verwendenden 5- bis 6wertigen Alkohole entsprechen der Formel

$$HOCH_2{-}(CHOH)_n{-}CH_2OH \qquad (I)$$

worin

n 3 oder 4 bedeutet.

Sie können durch Reduktion, z. B. durch katalytische Hydrierung, der Pentosen und Hexosen hergestellt werden. Bevorzugte erfindungsgemäß zu verwendende Alkohole I sind Adonit, Arabit, Xylit, Dulcit, Idit, Mannit und Sorbit. Besonders bevorzugter Pentit ist Xylit, besonders bevorzugte Hexite sind Mannit und Sorbit, wobei Sorbit der bevorzugteste Alkohol I überhaupt ist.

Im folgenden werden unter »Polyestern« fettsäure- und ölfreie Polyester, unter »Alkydharzen« fettsäure- und ölmodifizierte Polyester verstanden.

Unter Alkydharzen und Polyestern versteht man durch Polykondensation nach bekannten Verfahren aus Alkoholen und Carbonsäuren hergestellten Polykondensate der Art, wie sie z. B. in Römpps Chemielexikon, Bd. 1, S. 202, Frankh'sche Verlagsbuchhandlung, Stuttgart, 1966 definiert oder bei D. H. Solomon, The Chemistry of Organic Filmformers, S. 75—101, John Wiley & Sons Inc., New York, 1967, beschrieben sind.

Für die Synthese der Polyester und Alkydharze neben den Alkoholen I einzusetzende geeignete Alkohole sind aliphatische, cycloaliphatische und/oder araliphatische Alkohole mit 1—6, vorzugsweise 1—4, an nicht-aromatische C-Atome gebundenen OH-Gruppen und 1—24 C-Atomen pro Molekül, z. B. Glykole wie Ethylenglykol, Propylenglykol, Butandiole, Hexandiole; Etheralkohole wie Di- und Triethylenglykole; oxethylierte Bisphenole; perhydrierte Bisphenole; ferner Trimethylolethan, Trimethylolpropan, Glycerin, Pentaerythrit, Dipentaerythrit; einwertige, kettenabbrechende Alkohole wie Propanol, Butanol, Cyclohexanol und Benzylalkohol. Beispiele für veresterungsfähige Hexahydrophthalsäurederivate sind ihre Ester.

Die Menge aromatischer Polycarbonsäurekomponenten, die ohne Nachteil eingesetzt werden kann, hängt von der Menge der eingesetzten Zuckeralkohole (a) ab: Je mehr Zuckeralkohole, desto weniger aromatische Polycarbonsäurekomponenten wird man benutzen.

Für die Synthese der Polyester und Alkydharze neben den cycloaliphatischen Polycarbonsäuren oder ihren Derivaten bevorzugte Säurekomponenten sind aliphatische und aromatische mehrbasische Carbonsäuren, vorzugsweise Di-, Tri- und Tetracarbonsäuren, mit 4—12 C-Atomen pro Molekül oder deren veresterungsfähige Derivate (z. B. Anhydride oder Ester), z. B. Phthalsäureanhydrid, Isophthalsäure, Terephthalsäure, Trimellithsäureanhydrid, Pyromellithsäureanhydrid, Maleinsäureanhydrid, Fumarsäure, Glutarsäure(anhydrid), Adipinsäure und Bernsteinsäureanhydrid, Sebacinsäure, ferner halogenierte Säuren, wie Chlorphthalsäuren, z. B. 3,4,5,6-Tetrachlorphthalsäure(anhydrid).

Für die Herstellung der Polyester und Alkydharze bevorzugte Monocarbonsäuren sind aliphatische, cycloaliphatische gesättigte und ungesättigte und/oder aromatische Monocarbonsäuren mit 6—24 C-Atomen pro Molekül wie Benzoesäure, Butylbenzoesäure, Tolylsäure, Hexahydrobenzoesäure, Abietinsäure, Milchsäure sowie Fettsäuren und Ester derselben wie Leinöl, Sojaöl, Holzöl, Sonnenblumenöl, Saffloröl, Ricinusöl, Ricinenöl, Baumwollsaatöl, Erdnußöl, Oiticicaöl, Tallölfettsäure, Leinölfettsäure, Sojaöl-, Holzöl-, Sonnenblumenöl-, Oiticicaöl-, Saffloröl- und Ricinenölfettsäure und aus natürlichen, ungesättigten Ölen oder Fettsäuren durch Konjugierung oder Isomerisierung gewonnene Produkte; geeignete gesättigte Fettsäuren sind beispielsweise Cocosölfettsäure und $\alpha$-Ethylhexansäure sowie Isotridecansäure.

Die Säurezahlen der erfindungsgemäß hergestellten Polyester und Alhydharze liegen vorzugsweise in den Bereichen von 3—60, z. B. von 3—20 (ölfrei bzw. lufttrocknend), von 15—35 (Ricinentyp), von 30—60 (wasserverdünnbar — vor Neutralisation).

Das als Zahlenmittel bestimmte Molekulargewicht der Polyester und Alkydharze beträgt 2000—10 000 (bis zu Molekulargewichten von 5000 dampfdruckosmometrisch bestimmt in Dioxan und Aceton, wobei bei differierenden Werten der niedrigere Wert als korrekt angesehen wird; bei Molekulargewichten über 5000 membranosmometrisch bestimmt in Aceton).

Die Menge der eingesetzten Fettsäuren oder Öle ist im Rahmen, der durch die gewünschte Anwendung festgelegt wird, frei wählbar. Die erfindungsgemäß herzustellenden Harze können demnach ölfrei, kurz-, mittel- oder langölig sein.

Der Einbau der Fettsäuren findet bevorzugt über die Veresterung der freien Säuren statt, doch ist es auch möglich, über die natürlichen Öle durch Umesterung und anschließende Polyveresterung erfindungsgemäße Alkydharze zu erhalten.

Die Polyester und Alkydharze können in an sich bekannter Weise durch Kondensation nach den üblichen Verfahren hergestellt werden. Im allgemeinen läßt man hierbei die Rohstoffgemische bei Temperaturen von 140—260° C in einer Schutzgasatmosphäre, z. B. unter Stickstoff, so lange unter Wasserabspaltung reagieren, bis die gewünschte Säurezahl erreicht ist.

Geeignete Polyester und Alkydharze sind beispielsweise auch die Polyesterpolyhalbester, wie sie durch eine 2-Stufenreaktion aus Hydroxylgruppen-haltigen Alkydharzen oder Polyestern und Hexahydrophthalsäureanhydriden herstellbar sind (DE-OS 1 519 146).

Die Alkydharze werden vorzugsweise als Bindemittel für lufttrockende Lacke eingesetzt, die ölfreien Polyester vorzugsweise als Bindemittel für Einbrennlacke. Als vernetzende Komponente beim Einsatz als Einbrennlackbindemittel empfehlen sich Aminoplastharze.

Als Aminoplastharze sind beispielsweise Melamin-Formaldehyd- oder Harnstoff-Formaldehyd-Kondensationsprodukte anzusehen. Melaminharze sind alle herkömmlichen nicht veretherten oder mit gesättigten Monoalkoholen mit 1 bis 4 C-Atomen veretherten Melamin-Formaldehyd-Kondensate, wie sie z. B. in der FR-PS 943 411 oder bei D. H. Solomon, The Chemistry of Organic Filmformers, 235—240, John Wiley & Sons, Inc., New York, 1967, beschrieben sind. Die Melaminharze können jedoch auch ganz oder teilweise durch andere vernetzende Aminoplasten, wie sie z. B. in »Methoden der Organischen Chemie« (Houben—Weyl), Bd. 14/2, Teil 2, 4. Aufl., Georg Thieme Verlag, Stuttgart, 1963, 319 ff. beschrieben sind, ersetzt werden.

Die erfindungsgemäß hergestellten Polyester und Alkydharze werden vorzugsweise in organischen Lösungsmitteln, wie z. B. Xylol oder Testbenzin, gelöst zu Lacken verarbeitet. Nach Neutralisation der

freien Carboxylgruppen können sie jedoch auch als Bindemittel für wäßrige Lacke eingesetzt werden.

Die in den nachfolgenden Beispielen genannten Teile sind Gewichtsteile; Prozentangaben beziehen sich auf das Gewicht.

### Beispiel 1

1213 Teile Sorbit, 1420 Teile Sojaölfettsäure, 220 Teile Benzoesäure und 945 Teile Hexahydrophthalsäureanhydrid wurden gemeinsam unter Durchleiten von Stickstoff in einem Kessel mit Rührer und Destillationsbrücke in 1 Stunde auf 140° C, dann in 8 Stunden auf 210° C erhitzt und weitere 11 Stunden bei dieser Temperatur gehalten. Man erhielt ein Alkydharz mit folgenden Kennzahlen: Viskosität entsprechend einer Auslaufzeit von 47 sec (50%ig in Xylol), Säurezahl 9. Aus dem Alkydharz wurde eine 65%ige Lieferform in Xylol hergestellt.

### Beispiel 2

1213 Teile Sorbit, 1924 Teile Sojaölfettsäure und 945 Teile Hexahydrophthalsäureanhydrid wurden nach dem in Beispiel 1 beschriebenen Verfahren zu einem Alkydharz mit folgenden Kennzahlen umgesetzt: Viskosität entsprechend einer Auslaufzeit von 50 sec (50%ig in Xylol), Säurezahl 4,5. Aus dem Alkydharz wurde eine 65%ige Lieferform in Xylol hergestellt.

Das Harz gemäß Beispiel 1 besaß eine Jodfarbzahl von 15, das Harz gemäß Beispiel 2 eine Jodfarbzahl von 10 (Jodfarbzahl, 50%ig in Xylol, gemessen nach DIN 6162).

Klarlacke auf Basis der erfindungsgemäßen Beispiele (55 µm Trockenfilmschichtdicke) benötigten für die Trocknung bis zur Klebfreiheit 4,5 Stunden.

Die Pendelhärten (DIN 53 157) von Klarlacken (55 µm Trockenfilmschichtdicke auf Glas) nach 72 Stunden Trocknungszeit betrugen 19 sec (Beispiel 1) und 17 sec (Beispiel 2).

## Patentansprüche

1. Verfahren zur Herstellung von gegebenenfalls Fettsäure-modifizierten Polyestern aus 2- bis 6wertigen Alkoholen, Polycarbonsäuren (oder ihren veresterungsfähigen Derivaten), gegebenenfalls Monocarbonsäuren und/oder einwertigen Alkoholen, dadurch gekennzeichnet, daß

a) die 2- bis 6wertigen Alkohole zu mindestens 10 Gew.-%, bezogen auf alle eingesetzten Alkohole, aus 5- bis 6wertigen Zuckeralkoholen und

b) die Polycarbonsäuren bzw. ihre Derivate zu 50 bis 100 Gew.-%, bezogen auf alle eingesetzten Polycarbonsäurekomponenten, aus Hexahydrophthalsäure(anhydrid); 3-Methyl-Hexahydrophthalsäure(anhydrid) oder 4-Methyl-Hexahydrophthalsäure(anhydrid) oder ihren veresterungsfähigen Derivaten bestehen mit der Maßgabe, daß die eingesetzten Polycarbonsäurekomponenten nicht mehr als 50 Gew.-% aromatische Polycarbonsäuren oder deren veresterungsfähige Derivate enthalten.

2. Verfahren nach Anspruch 1, dadurch gekennzeichnet, daß die 2- bis 6wertigen Alkohole zu mindestens 30 Gew.-%, bezogen auf alle eingesetzten Alkohole, aus 5- bis 6wertigen Zuckeralkoholen bestehen.

3. Verfahren nach Ansprüchen 1 und 2, dadurch gekennzeichnet, daß die 2- bis 6wertigen Alkohole zu über 60 Gew.-%, bezogen auf alle eingesetzten Alkohole, aus 5- bis 6wertigen Zuckeralkoholen bestehen.

4. Verfahren nach Ansprüchen 1 bis 3, dadurch gekennzeichnet, daß die Polycarbonsäuren bzw. ihre Derivate zu 80 bis 100 Gew.-%, bezogen auf alle eingesetzten Polycarbonsäurekomponenten, aus Hexahydrophthalsäure(anhydrid); 3-Methyl-Hexa-hydrophthalsäure(anhydrid) oder 4-Methyl-Hexahydrophthalsäure(anhydrid) oder ihren veresterungsfähigen Derivaten bestehen.

5. Verfahren nach Ansprüchen 1 bis 4, dadurch gekennzeichnet, daß die Polycarbonsäuren bzw. ihre Derivate zu 98 bis 100 Gew.-%, bezogen auf alle eingesetzen Polycarbonsäurekomponenten, aus Hexahydrophthalsäure(anhydrid); 3-Methyl-Hexahydrophthalsäure(anhydrid) oder 4-Methyl-Hexahydrophthalsäure(anhydrid) oder ihren veresterungsfähigen Derivaten bestehen.

6. Nach Verfahren gemäß Ansprüchen 1 bis 5 erhältliche Polyester und Alkydharze.

7. Verwendung der Harze nach Anspruch 6 als Lackbindemittel.

8. Verwendung nach Anspruch 7 für lufttrocknende Lacke.

## Claims

1. Process for the production of polyesters, which are optionally modified by fatty acids, from 2- to 6-hydric alcohols, polycarboxylic acids (or esterifiable derivatives thereof), optionally monocarboxylic acids and/or monohydric alcohols, characterised in that

a) the 2- to 6-hydric alcohols consist, to an extent of at least 10% by weight, based on all the alcohols used, of 5- to 6-hydric sugar alcohols and
b) the polycarboxylic acids or the derivatives thereof consist, to an extent of 50 to 100% by weight, based on all the polycarboxylic acid components used, of hexahydrophthalic acid (anhydride); 3-methyl-hexahydrophthalic acid (anhydride) or 4-methyl-hexahydrophthalic acid (anhydride) or esterifiable derivatives thereof, with the proviso that the polycarboxylic acid components used do not contain more than 50% by weight of aromatic polycarboxylic acids or esterifiable derivatives thereof.

2. Process according to Claim 1, characterised in that the 2- to 6-hydric alcohols consist, to an extent of at least 30% by weight, based on all the alcohols used, of 5- to 6-hydric sugar alcohols.
3. Process according to Claims 1 and 2, characterised in that the 2- to 6-hydric alcohols consist, to an extent of more than 60% by weight, based on all the alcohols used, of 5- to 6-hydric sugar alcohols.
4. Process according to Claims 1 to 3, characterised in that the polycarboxylic acids or the derivatives thereof consist, to an extent of 80 to 100% by weight, based on all the polycarboxylic acid components used, of hexahydrophthalic acid (anhydride); 3-methyl-hexa-hydrophthalic acid (anhydride) or 4-methyl-hexahydrophthalic acid (anhydride) or esterifiable derivatives thereof.
5. Process according to Claims 1 to 4, characterised in that the polycarboxylic acids or the derivatives thereof consist, to an extent of 98 to 100% by weight, based on all the polycarboxylic acid components used, of hexahydrophthalic acid (anhydride); 3-methyl-hexahydrophthalic acid (anhydride) or 4-methyl-hexahydrophthalic acid (anhydride) or esterifiable derivatives thereof.
6. Polyesters and alkyd resins obtainable by processes according to Claims 1 to 5.
7. Use of the resins according to Claim 6 as lacquer binders.
8. Use according to Claim 7 for air-drying lacquers.

## Revendications

1. Procédé de production de polyesters éventuellement modifiés par un acide gras, dérivés d'alcools divalents à hexavalents, d'acides polycarboxyliques (ou de leurs dérivés estérifiables), le cas échéant d'acides monocarboxyliques et/ou d'alcools monovalents, caractérisé en ce que

a) les alcools divalents à hexavalents sont composés au moins à 10% en poids, par rapport à tous les alcools utilisés, d'alcools-sucres pentavalents ou hexavalents et
b) les acides polycarboxyliques et leurs dérivés sont composés, à 50—100% en poids par rapport à tous les composants acides polycarboxyliques utilisés, d'acide (anhydride) hexahydrophtalique; d'acide (anhydride) 3-méthylhexahydrophtalique ou d'acide (anhydride) 4-méthylhexahydrophtalique ou de leurs dérivés estérifiables, sous réserve que les composants acides polycarboxyliques utilisés ne contiennent pas plus de 50% en poids d'acides polycarboxyliques aromatiques ou de leurs dérivés estérifiables.

2. Procédé suivant la revendication 1, caractérisé en ce que les alcools divalents à hexavalents sont composés au moins à 30% en poids, par rapport à tous les alcools utilisés, de sucres-alcools pentavalents ou hexavalents.
3. Procédé suivant les revendications 1 et 2, caractérisé en ce que les alcools divalents à hexavalents sont composés à plus de 60% en poids, par rapport à tous les alcools utilisés, de sucres-alcools pentavalents ou hexavalents.
4. Procédé suivant les revendications 1 à 3, caractérisé en ce que les acides polycarboxyliques ou leurs dérivés sont composés à 80—100% en poids, par rapport à tous les composants acides polycarboxyliques utilisés, d'acide (anhydride) hexahydrophtalique; d'acide (anhydride) 3-méthylhexahydrophtalique ou d'acide (anhydride) 4-méthylhexahydrophtalique ou de leurs dérivés estérifiables.
5. Procédé suivant les revendications 1 à 4, caractérisé en ce que les acides polycarboxyliques et leurs dérivés sont composés à 98—100% en poids, par rapport à tous les composants acides polycarboxyliques utilisés, d'acide (anhydride) hexahydrophtalique; d'acide (anhydride) 3-méthylhexahydrophtalique ou d'acide (anhydride) 4-méthylhexahydrophtalique ou de leurs dérivés estérifiables.
6. Des polyesters et des résines alkyd pouvant être obtenus par le procédé suivant les revendications 1 à 5.
7. Utilisation des résines suivant la revendication 6 comme liants pour vernis.
8. Utilisation suivant la revendication 7 pour vernis séchant à l'air.